Europäisches Patentamt

(19) European Patent Office

Office européen des brevets

(11) **EP 0 775 895 A1**

(12) **EUROPEAN PATENT APPLICATION**

(43) Date of publication:
28.05.1997 Bulletin 1997/22

(51) Int. Cl.$^6$: **G01J 5/34**

(21) Application number: **95308492.8**

(22) Date of filing: **27.11.1995**

(84) Designated Contracting States:
AT BE CH DE DK FR GB IT LI NL SE

(71) Applicant: **EVERSPRING INDUSTRY CO. LTD.**
Tu Cheng City, Taipei (TW)

(72) Inventors:
• **Chen, Wan-Lai**
Tan-Shui Town, Taipei Hsien (TW)

• **Chien, Pie-Yeu**
Pan-Chiao City, Taipei, Hsien (TW)
• **Lin, Chung-Hsien**
Hsin-Hua Town, Tai-Nan, Hsien (TW)

(74) Representative: **Calderbank, Thomas Roger et al**
**MEWBURN ELLIS**
**York House**
**23 Kingsway**
**London WC2B 6HP (GB)**

(54) **Thermal-isolation frequency transferable pyroelectric infrared radiation detector and manufacturing process thereof**

(57) In the present invention of Thermal Isolation Frequency Transferable Pyroelectric Infrared Radiation Detector and its Making Process, a thermal isolation and a low thermal conductivity materials are employed to reduce the heat dissipation of a pyroelectric infrared radiation detector by radiation, convection and conduction. By such methods the cutoff frequency of a pyroelectric infrared radiation detector becomes transferable and its low frequency response is also achieved. This makes the said detector possible to identify low speed moving objects. The said detector of present invention has achieved a remarkable innovation in the field of low frequency response. The present invention will definately present users a detector with high sensitivity, high stability, and prominent detecting ability. At the same time, the present invention has overcome the inevitable weak point of traditional detectors, failure to response at low frequency. On the contrary, the detector of the present nvention is able to detect low speed moving objects and enlarges the plication field of pyroelectric infrared detector.

FIG. 5

## Description

The present invention relates to manufacture a new Thermal-Isolation Pyroelectric Infrared Radiation Detector associated with its Making Process. In the process of making, the support columns are cemented by low heat conducting material under high temperature; and the inner wall of the outer case is coated with heat insolation material. Thus the present invention specially makes use of a thermal isolation material for coating and a low thermal conducting material for constructing a new type pyroelectric infrared radiation detector by decreasing the thermal conductivity of the said detector, and offer the said detector the ability of frequency transfer and improve the low frequency response. As a result, the present invention may greatly improve the sensitivity, stability and detecting ability of the pyroelectric infrared detector and make the detector possible to detect low speed moving objects.

On the present market, pyroelectric infrared radiation detector is widely used in taking precaution against catastrophe and fires, detecting infringement, unauthorized trespass to prohibited zones or buildings, it also can be applied to automatic switching of the emergency lighting systems, opening and closing of automatic doors, even to automatic cooking control.

The band width of infrared radiation wave which the pyro-electric infrared radiation detector may detect is very wild and it is even can be effective under room temperature. Owing to the restriction on conditions of the elements of detector itself and the outer electric circuits, the frequency response of the detector shows Band Pass phenominon, namely, the frequencies before lower cutoff point and after higher cutoff point will be filtered out and consequently it is impossible to achieve low frequency response. Such a weak point results in the failure of a traditional pyroelectric infrared radiation detector to detect foreign infringing objects with low moving speed, or unable to prevent the occurence of catastrophe.

Refer to Fig. (1) and Fig. (2) , there are two paths of heat dissipation for the traditional pyroelectric infrared radiation detector :

The first path is via metallic lead wires of the pyroelectric element and the outer case [full line arrow direction of Fig. (1) and Fig. (2)]; the heat is dissipated by conduction; the second path is heat dissipation by convention and radiation from pyroelectric element of the detector directly [dotted line arrow direction of Fig. (1) and Fig. (2)].

A preferred aim of the present invention is to innovate one or both of the above two problems:

heat dissipation and band pass phenomenon. In die making process, the materials having thermal isolating and low heat conducting properties are introduced as fundamental of design. By employing thermal isolation and low thermal conductivity materials, heat dissipation by convection and conduction of the pyroelectric infrared radiation detector is greatly reduced, resulting in cutoff frequency of the said detector transferable. By means of this method, low frequency response of the pyroelectric infrared radiation detector is achieved, also it makes the said detector able to improve its sensitivity, stability and detecting ability possible to identify low speed moving objects.

The presently invented Thermal Isolation Pyroelectric Radiation Detector comprises the following items in its making process namely :

(1) The base plate is welded to the board of electric circuit.
(2) The FET circuit element is installed on the base plate. After welding and washing, an electric conducting adhesive substance is coated on the base plate.
(3) The supporting columns are cut, washed nickle cemented under high temperature, re-cut and placed into the base plate and adhered to the base plate. After being hardened, the base plate is divided.
(4) The base plate is welded to the bottom foundation, after washing, inspecting welded points, an electric conducting adhesive substance is coated on the supporting columns.
(5) The pyroelectric element is cut, washed chromium cemented under high temperature, then adhered to the supporting columns.
(6) The infrared radiation wave filter is cut then adhered to the outer case which is coated with an adhesive substance.
(7) The outer case is electro-welded to the base foundation.

The special feature is found first in the making process (3) that After being cut and washed, the supporting columns are cemented by certain low thermal conducting material under high temperature, such as nickle to increase the thermal resistance of the supporting columns. Consequently amount of heat dissipation through conduction will be reduced. Second, in the making process (6), after the infrared radiation wave filter is adhered to the outer case with an adhesive substance, the inner wall surface of the outer case excluding the part occupied by the infrared radiation wave filter, is coated with thermal isolation material such as acrylic resin in order to reduce the heat dissipation by radiation and convection.

Preferred features of the invention will now be described:

Thermal-Isolated Frequency Transferable Infrared Radiation Detector of the present invention comprises one outer case; one infrared radiation wave filter, one piroelectric element, two supporting columns, one base plate, and one bottom foundation.

The said outer case is of cylindrical construction made of metalic material, and on the upper part of the said outer case a rectangular open window is equipped.

The infrared radiation wave filter is mounted on the open window to filter out unnecessary visible light and grant to pass only the infrared radiation of the wave length between 7 ~ 14 um.

Upper part of the pyroelectric element is cemented with a heat absorbing material such as chromium under high temprature in order that it can absorb infrared radiation wave and stimulate the pyroelectric element to generate pyroelectric function.

The two supporting columns formed in long rectangular shape is to be used to support the pyroelectric element.

The two supporting columns rest on the base plate. Some electric circuit elements such as FET are installed on the bottom surface of the base plate. The said elements are connected to the supporting columns by means of the welded spots located on the upper surface of the base plate, furthermore, making use of opposite sides of the welded spots on upper surface of the base plate, the circuit is connected to the electrical terminals installed under the bottom foundation.

The bottom foundation in circular shape has a jutting point at one side of the bottom foundation. Inside the said foundation, There are three termial feet furnishing electric connection.

The outstanding feature is that the inner wall surface of the outer case excluding the part occupied by infrared radiation wave filter is coated with thermal isolation material in order to reduce the heat dissipation by radiation and convection, furthermore, low thermal conductivity material is adopted for causing the supporting columns to increase their thermal resistance and to reduce the amount of heat dissipated through conduction. By this method,low frequency response of the pyroelectric infrared radiation detector is achieved, also it makes the said detector able to improve its sensitivity, stability and detecting ability possible to identify low spead moving objects.

In its process, the presently invented Thermal Isolation Frequency Transferable Pyroeletric Infrared Radiation Detector employed low thermal conducting material as the construction material for the supporting columns and coated thermal isolation painting material on the inner surface of the outer case. By means of using thermal isolating painting and low thermal conducting material, the heat dissipation of die pyroelectric element of the said detector is reduced, consequently, the low frequency response of the pyro-electric infrared radiation detector is greatly improved owing to the cutoff frequency of the frequency response for the detector becomes transferable, and the detector is certainly able to identify low speed moving objects.

Further to understand the technical principles of the present invention, referring to formula concerning responsivity of pyro-electric infrared radiation detector :

$$Ru = Ro \left[1 + \omega^2 T^2 t\right]^{-1/2} \left[\left[1 + \omega\eta^2 Te\right]\right]^{-1/2}$$

$$Ro = \omega A P \eta N R / G$$

in the above formula $^{-1/2}$

Ru : frequency response of the pyroelectric infrared radiation detector
Ro : strength of frequency response of the pyroelectric infrared radiation detector
$\omega$ : angular frequency
Tt : thermal time constant, $Tt = H/G$
To : electrical time constant, $Te = RC$
A : infrared radiation absorption area of the pyroelectric element
P : constant of pyroelectricity
$\eta$ : infrared radiation absorption rate of phroelectric element
G : thermal conductivity
H : thermal capacitance
R : equivalent resistance of pyroelectric element and outer circuit
C : equivalent capacitance of pyroelectric element and outer circuit

Referring to the above formula for frequency response of the pyroelectric infrared radiation detector, it is understood that cutoff frequency of a detector is determined by the thermal charac teristics of the detector, also it is determined by the electrical characteristics of the detector itself and the outer electric circuit as well.

The Bode Plot of the traditional pyroelectric infrared radiation detector is shown on Fig. (3) - (a).

$$\text{if } H/G > RC, \text{ then } \omega_1 = (H/G) , \omega_2 = 1/RC \tag{a}$$

$$\text{if } H/G < RC, \text{ then} \omega_1 = 1/RC, \ \omega_2 = (H/G) \tag{b}$$

If the design of the outer circuit does not cause low requency attenuation, it will be possible by reducing thermal conductivity of the detector and increase the value of Ro, the detectors, cutoff frequency can be transfered without influencing other charac-teristics of the pyroelectric infrared radiatiion detector, also value of Ru will increase simultaneously.

$$\text{If } (H/G) = \omega_1 \tag{b}$$

then $\omega_1$ transfers to $\omega_1'$, $\omega_2$ remains unchanged, Ru takes
the value shown on Fig. (3) ...(b)

Refering to Formula (b). It is observed by reducing thermal conductivity G, the frequency band width of a pyroelectric infrared radiation detector will be lengthened, thermal time constant T will increase and cutoff value at lower frequency of the detector will be reduced, causing the strength of frequency response Ro' increased and the detector achieves better low frequency response.

$$\text{If } (H/G) = \omega_2 \tag{c}$$

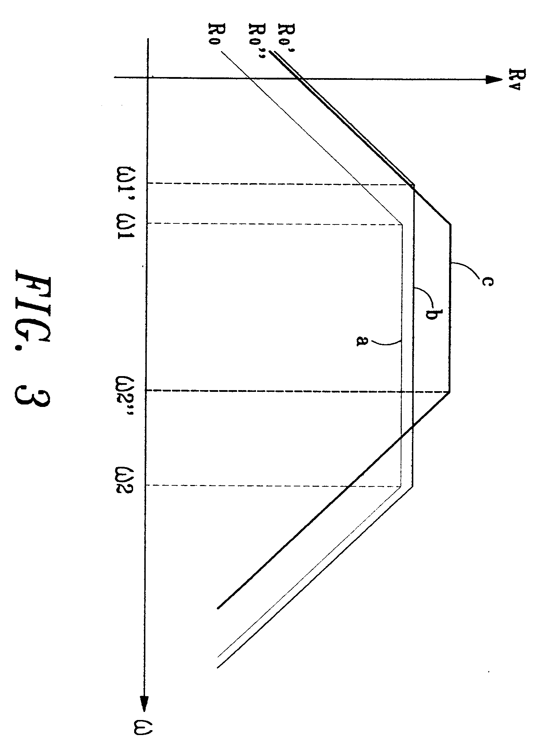

then $\omega_2$ transfers to $\omega_2''$, $\omega_1$ remains unchanged, Ru takes the value shown on Fig.3...(c)

Referring to Formula (c). It is observed by reducing thermal conductivity G, the frequency band width of a pyroelectric infrared radiation detector will be shortened, thermal time constant Tt will increase and cutoff value at higher frequency of the detector will be reduced, causing the strength of frequency response Ro" increased and the detector achieves better low frequency response as well.

The present invention, as well as its many advantages, may be further understood by the following detailed description and drawings in which:

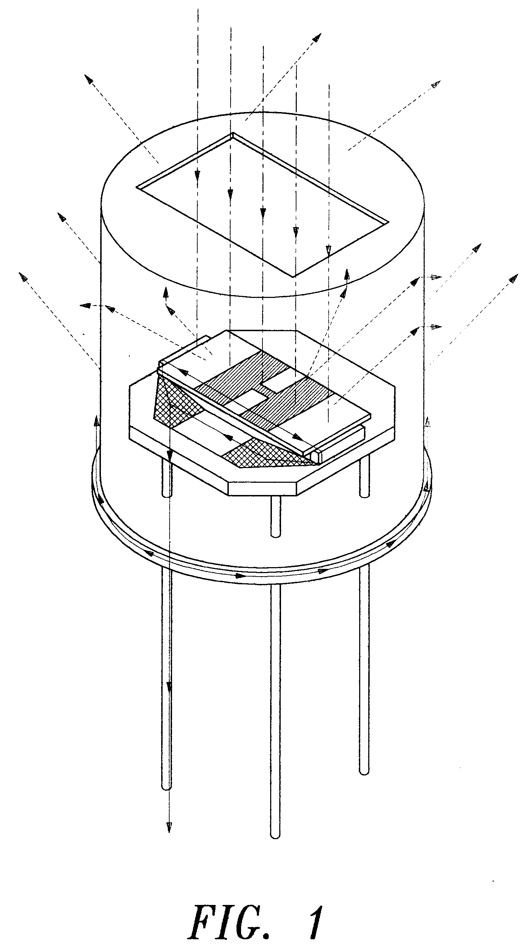

Fig. 1 shows the view of heat radiation and conduction route of a traditional pyroelectric infrared radiation detector.

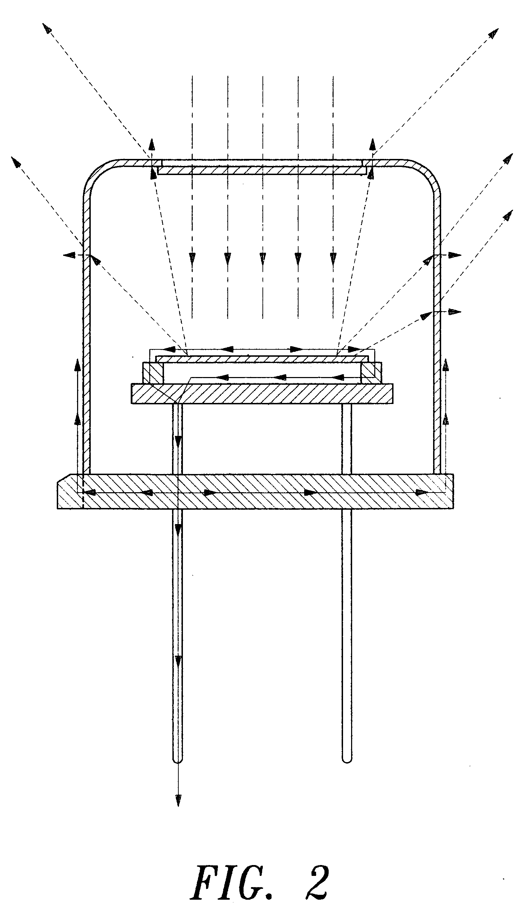

Fig. 2 shows the perspective view of heat radiation and conduction route of a traditional pyroelectric infrared radiation detector.

Fig. 3 is the Bode Plot of a pyroelectric infrared radiation detector.

Fig. 4 is a exploded view of elements of an embodiment of the present invention

Fig. 5 is a three dimensional assembly view of the embodiment of the present invention

Fig. 6 is a cross sectional view of the assembly of the embodiment of the present invention

Fig. 7 shows the heat convection and conduction route of the embodiment of the present invention

Fig. 8 is the cross sectional view of the heat convection and conduction route of the embodiment of the present invention.

Fig. 9 is a block diagram of the making process of the present invention.

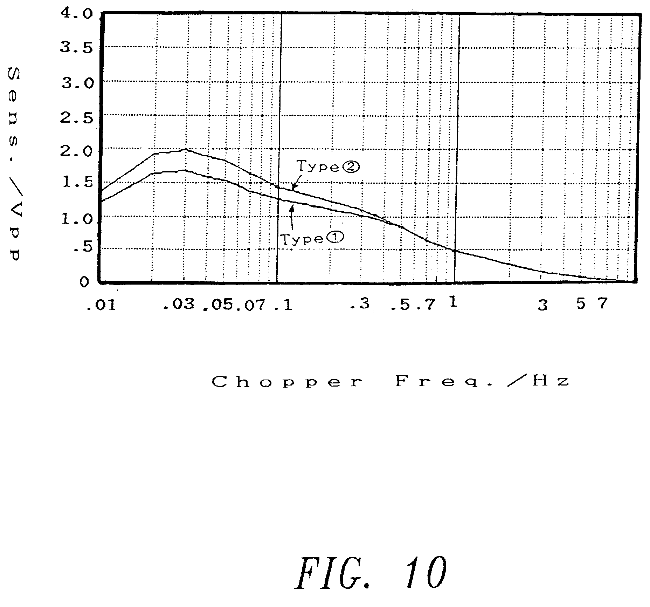

Fig. 10 is chopper frequency (HZ) viz. induced voltage (volt) actually measured curve.

Table 1 shows data of Vpp of a traditional pyroelectric infrared radiation detector actually measured.
Table 2 shows actually measured data of Vpp of a Thermal Isolation, Frequency Transferable Pyroelectric Infrared Radiation Detector of the present invention.
The symbols are illustrated in the following :

1 outer case
2 open window
12 thermal isolation material
2 infrared radiation wave filter
3 pyroelectric element
31 heat absorbing material

4 supporting column

5 base plate

51 welded spots

52 electric circuit element

6 bottom foundation

61 jutting point

62 penetrating holes for electric connection

7 terminals for electric connection

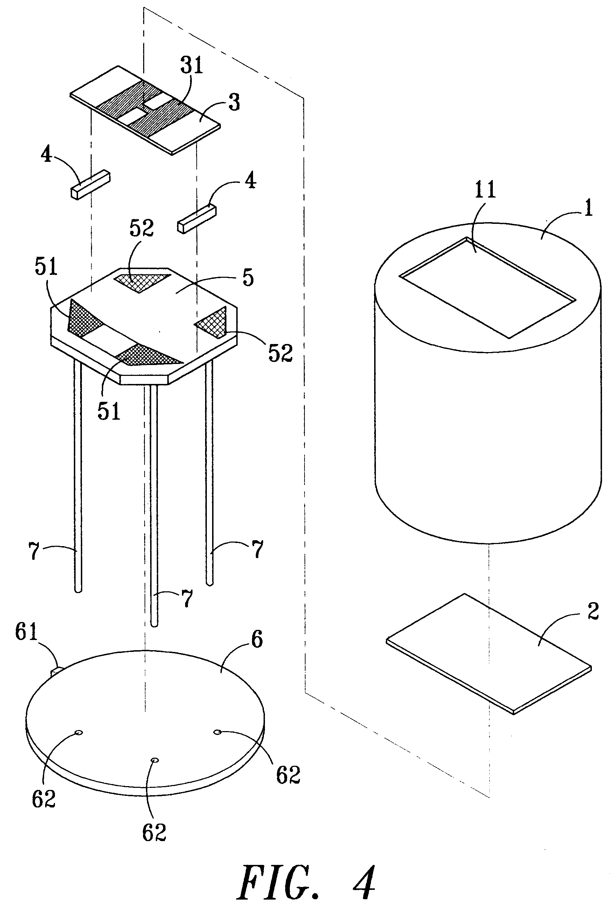

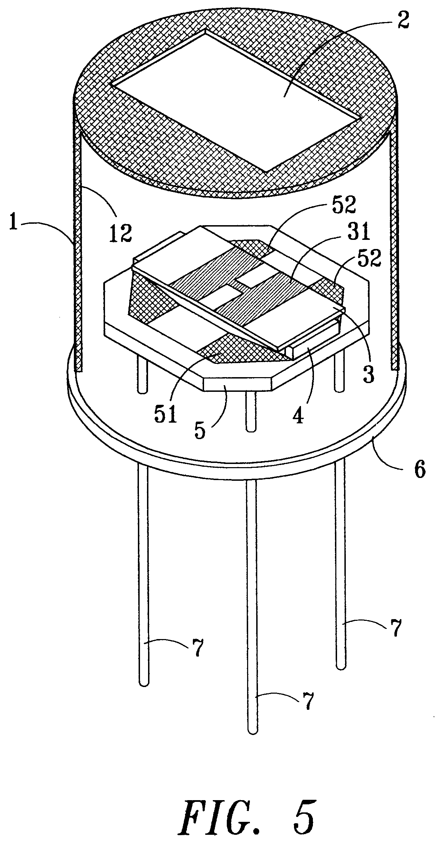

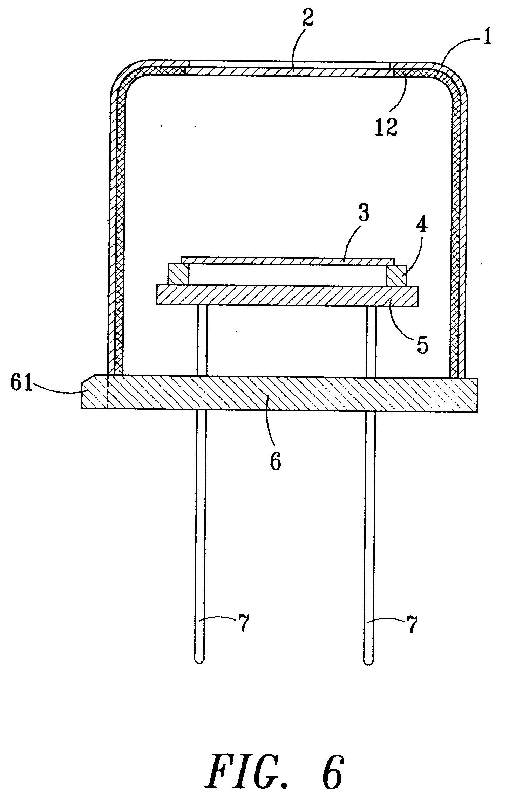

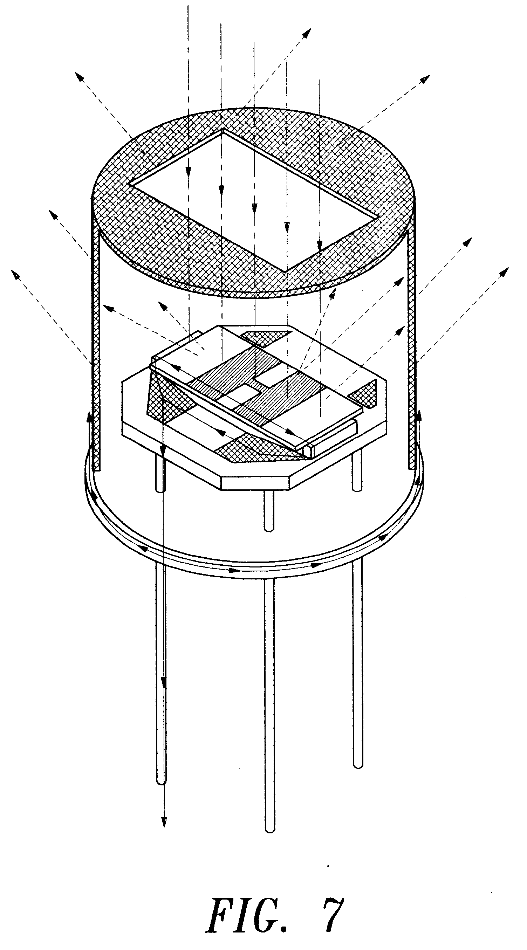

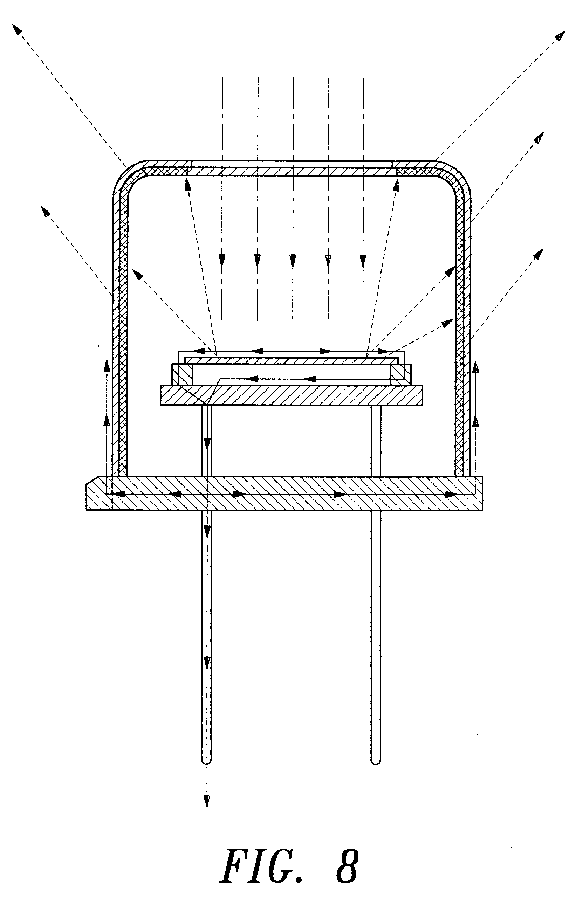

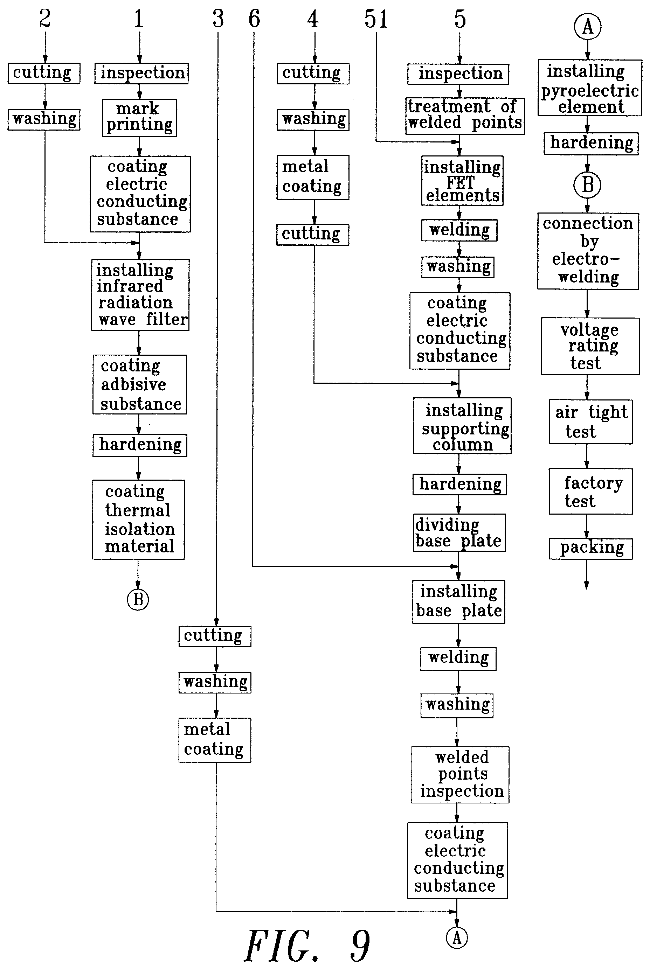

From Fig. 4 to Fig. 9 are illustration of Thermal Insolation Frequency Transferable Pyroelectric Infrared Radiation Detector , its process of present invention, its making process is as follows :

(1) The base plate 5 is welded to the board of electric circuit.

(2) The FET circuit element is installed on the base plate 5. After welding and washing, an electric conducting adhesive substance is coated on the base plate 5.

(3) The supporting columns 4 are cut, washed, nickle cemented under high temperature, re-cut and placed into the base plate 5 and adhered to the base plate 5. After being hardened, the base plate 5 is divided.

(4) The base plate 5 is welded to the bottom foundation 6, after washing, inspecting welded spots, an electric conducting adhesive substance is coated on the supporting columns 4.

(5) The pyroelectric element 3 is cut, washed, chromium cemented under high temperature, then adhered to the supporting columns 4.

(6) The infrared radiation wave filter 2 is cut, then adhered to the outer case 1 which is coated with an adhesive substance.

(7) The outer case 1 is electro-welded to the base foundation 6.

The special feature is shown first in the making process (3) that the supporting columns 4 after being cut and washed, are cemented by certain low thermal conductivity material under high temperature, such as nickle to increase the thermal resistance of the supporting columns 4. Consequently amount of heat dissipation through conduction will be reduced [ full line arrow direction of Fig. (7) and Fig. (8)]. The material used to construct the supporting columns 4 is of low thermal conductivity, such as nickle to reduce heat dissipation, but it does not affect electric conductivity of the supporting columns 4. In making process (6), after the infrared radiation wave filter 2 is adhered to the outer case 1 with an adhesive substance, the inner wall surface of the outer case 1 excluding the part occupied by the infrared radiation wave filter 2 is coated with thermal isolation material 12 such as acrylic resin in order to reduce the heat dissipation by radiation and convection [dotted line arrow direction of Fig. (7) and Fig. (8)].

Thermal Isolation Frequency Transferable Infrared Radiation Detector of the present invention comprises one outer case 1; one infrared radiation wave filter 2; one pyroelectric element 3; two supporting columns 4; one base plate 5 and one bottom foundation 6.

The said outer case 1 is in cylindrical shape made of metalic material, and on the upper part of the said outer case 1, a rectanguler open window 11 is equipped.

The infrared radiation wave filter 2 is mounted on the open window 11 to filter out unnecessary visible light and grant to pass only the infrared radiation wave with length between 7 ~ 14um.

Upper part of the pyroelectric element 3 is cemented with a heat absorbing material such as chromium under high temprature in order that it can absorb infrared radiation wave and stimulate the pyroelectric element 3 to generate pyroelectric function.

The two supporting columns 4 formed in long vectungular shape is to be used to support the pyroelectric elements 3.

The two supporting columns 4 rest on the base plate. Some electric circuit elements 52 such as FET (field effect transistor) are installed on the bottom surface of the base plate 5. The said elements 52 are connected to the supporting columns 4 by means of the welded spots 51 located on the upper surface of the base plate 5, furthermore, making use of opposite sides of the welded spots 51 on upper surface of the base plate 5, the circuit is connected to the electrical terminal feet 7 supplied under the bottom foundation 6.

The bottom foundation 6 in circular shape has a jutting point 61 at one side of the bottom foundation 6. Within the bottom foundation 6 there are three terminal feet 7 furnishing electric connection.

The special feature is that the material used to construct the supporting columns 4 is of low thermal conductivity such as nickle causing increase of thermal resistance of the supporting columns 4, and the heat dissipation by conduction is greatly reduced. Furthermore, the inner wall surface of the outer case 1 excluding the part occupied by infrared radiation wave filter 2 is coated with thermal isolation material 12 such as acrylic resin in order to reduce the heat dissipation by radiation and convection. This cause the frequency transfer, namely, transfer of cutoff frequency of a pyroelectric infrared radiation detector, resulting in improved low frequency response, sensitivity ,stability and detecting ability of the said detector possible to identify low speed moving objects.

In the making process Thermal Isolation Frequency Trans-ferable Pyroelectric Infrared Radiation Detector of the present invention employs thermal isolation and low thermal conductivity materials to reduce heat dissipation of pyroelectric element of the said detector by radiation and convection [dotted line arrow direction of Fig. (7) and Fig. (8)]; or heat dissipation by conduction along the lead wires of pyroelectric element itself and outer metallic case [ full line arrow direction of Fig.(7) and Fig. (8)]. By this method the low frequency respone of the piroelectric infrared radiation detector is achieved. In other words, by means of employing thermal isolation and low thermal conductivity materials, the heat convection and heat conduction of a pyroelectric infrared radiation detector are reduced. This causes the frequency transfer, namely, transfer of cutoff frequency of a pyroelectric infrared radiation detector, resulting in increased low frequency response strength, improved low frequency response, sensitivity, stability and detecting ability of the said detector possible to identify low speed moving objects.

Fig. (10) is a curve of chopper frequency (HZ) viz induced voltage (v) actually measured in the present invention. Incoming infrared radiation wave is caught by a chopper in selected frequency, where a pyroelectric infrared radiation detector located after the chopper detect this particular infrared radiation. Then it is converted to a signal and goes into an amplifier. After amplification, it becomes output voltage of peak to peak value, the gain is about 25. X axis represents frequency response in herz while Y axis is output peak voltage Vpp in volt. Refering to Table 1 and Table 2, Table 1 enumerates the mean values of frequency and induced voltage measured 5 times enploying a traditional pyroelectric infrared radiation detector; while Table 2 are those values obtained employing the detector of present invention measured 10 times. Comparing the curves of Type 1 and Type 2 plotted according to Table 1 and Table 2, it is found that in low frequency range, the signal voltages detected by the detector of present invention are of significant improvement. This fact proves clearly the Thermal Isolated Frequency Transferable Pyroelectric Infrared Radiation Detector is feasible in practical application field.

The said detector of present invention has achieved a remarkable innovation in the filed of low frequency response. The present invention will definitely present users a detector with high sensitivity, high stability and prominent detecting ability. At the same time, the present invention has overcome the inevitable weak point of traditional detectors, failure to response at low frequency. On the contrary, the detector of the present invention is able to detect low speed moving objects and enlarges the application field of pyroelectric infrared radiation detector.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

Type①

| NO | 0.01 | 0.02 | 0.03 | 0.04 | 0.05 | 0.07 | 0.1 | 0.3 | 0.5 | 0.7 | 1 | 3 | 5 | 7 | 10 Hz |
|---|---|---|---|---|---|---|---|---|---|---|---|---|---|---|---|
| 1 | 1.359 | 1.781 | 1.781 | 1.656 | 1.563 | 1.406 | 1.281 | 1.063 | 0.844 | 0.656 | 0.500 | 0.181 | 0.103 | 0.069 | 0.045 |
| 2 | 0.922 | 1.375 | 1.484 | 1.344 | 1.422 | 1.313 | 1.188 | 0.938 | 0.813 | 0.625 | 0.453 | 0.169 | 0.100 | 0.064 | 0.044 |
| 3 | 1.063 | 1.516 | 1.563 | 1.547 | 1.469 | 1.344 | 1.203 | 0.938 | 0.813 | 0.625 | 0.469 | 0.175 | 0.103 | 0.067 | 0.044 |
| 4 | 1.188 | 1.656 | 1.719 | 1.688 | 1.594 | 1.422 | 1.328 | 1.063 | 0.906 | 0.688 | 0.500 | 0.200 | 0.109 | 0.072 | 0.047 |
| 5 | 1.406 | 1.828 | 1.766 | 1.609 | 1.563 | 1.406 | 1.281 | 1.031 | 0.875 | 0.656 | 0.484 | 0.181 | 0.106 | 0.067 | 0.044 |
| X̄ | 1.188 | 1.631 | 1.663 | 1.569 | 1.522 | 1.378 | 1.256 | 1.007 | 0.850 | 0.650 | 0.481 | 0.181 | 0.104 | 0.068 | 0.045 |
| s | 0.202 | 0.188 | 0.132 | 0.136 | 0.073 | 0.047 | 0.059 | 0.064 | 0.040 | 0.026 | 0.020 | 0.012 | 0.003 | 0.003 | 0.001 |
| x+s | 1.390 | 1.819 | 1.795 | 1.705 | 1.595 | 1.425 | 1.315 | 1.071 | 0.891 | 0.676 | 0.502 | 0.193 | 0.108 | 0.071 | 0.046 |
| X-s | 0.986 | 1.444 | 1.531 | 1.432 | 1.449 | 1.331 | 1.197 | 0.943 | 0.810 | 0.624 | 0.461 | 0.170 | 0.101 | 0.065 | 0.043 |
| Max | 1.406 | 1.828 | 1.781 | 1.688 | 1.594 | 1.422 | 1.328 | 1.063 | 0.906 | 0.688 | 0.500 | 0.200 | 0.109 | 0.072 | 0.047 |
| Min | 0.922 | 1.375 | 1.484 | 1.344 | 1.422 | 1.313 | 1.188 | .0938 | 0.813 | 0.625 | 0.453 | 0.169 | 0.100 | 0.064 | 0.044 |
| R | 0.484 | 0.453 | 0.297 | 0.344 | 0.172 | 0.109 | 0.140 | 0.125 | 0.093 | 0.063 | 0.047 | 0.031 | 0.009 | 0.008 | 0.003 |

(Unit:Vpp)

TABLE 1

Type②

| NO | 0.01 | 0.02 | 0.03 | 0.04 | 0.05 | 0.07 | 0.1 | 0.3 | 0.5 | 0.7 | 1 | 3 | 5 | 7 | 10 Hz |
|---|---|---|---|---|---|---|---|---|---|---|---|---|---|---|---|
| 1 | 1.547 | 2.094 | 2.094 | 1.938 | 1.844 | 1.641 | 1.453 | 1.156 | 0.875 | 0.688 | 0.500 | 0.181 | 0.113 | 0.072 | 0.048 |
| 2 | 1.344 | 1.857 | 1.922 | 1.750 | 1.766 | 1.563 | 1.359 | 1.031 | 0.875 | 0.609 | 0.469 | 0.169 | 0.103 | 0.067 | 0.043 |
| 3 | 1.109 | 1.641 | 1.703 | 1.656 | 1.578 | 1.453 | 1.297 | 1.000 | 0.813 | 0.594 | 0.453 | 0.163 | 0.097 | 0.064 | 0.042 |
| 4 | 1.281 | 1.859 | 1.096 | 1.828 | 1.781 | 1.594 | 1.391 | 1.063 | 0.844 | 0.625 | 0.484 | 0.175 | 0.106 | 0.066 | 0.045 |
| 5 | 1.391 | 1.875 | 1.875 | 1.656 | 1.672 | 1.500 | 1.328 | 1.000 | 0.813 | 0.609 | 0.438 | 0.163 | 0.094 | 0.063 | 0.042 |
| 6 | 1.234 | 1.766 | 1.096 | 1.906 | 1.828 | 1.656 | 1.469 | 1.094 | 0.813 | 0.641 | 0.484 | 0.175 | 0.100 | 0.067 | 0.044 |
| 7 | 1.312 | 1.875 | 1.984 | 1.922 | 1.844 | 1.672 | 1.484 | 1.125 | 0.906 | 0.656 | 0.484 | 0.175 | 0.109 | 0.072 | 0.047 |
| 8 | 1.406 | 1.969 | 2.031 | 1.953 | 1.875 | 1.672 | 1.469 | 1.125 | 0.875 | 0.656 | 0.516 | 0.188 | 0.109 | 0.073 | 0.047 |
| 9 | 1.516 | 2.156 | 2.250 | 2.172 | 2.031 | 1.828 | 1.578 | 1.156 | 0.875 | 0.688 | 0.500 | 0.181 | 0.116 | 0.073 | 0.048 |
| 10 | 1.437 | 1.984 | 2.094 | 2.031 | 1.938 | 1.703 | 1.484 | 1.063 | 0.844 | 0.625 | 0.469 | 0.169 | 0.100 | 0.067 | 0.042 |
| X̄ | 1.358 | 1.909 | 1.977 | 1.881 | 1.816 | 1.628 | 1.431 | 1.081 | 0.853 | 0.639 | 0.480 | 0.174 | 0.105 | 0.068 | 0.045 |
| s | 0.132 | 0.150 | 0.150 | 0.163 | 0.128 | 0.107 | 0.086 | 0.059 | 0.033 | 0.033 | 0.023 | 0.008 | 0.007 | 0.004 | 0.003 |
| x+s | 1.489 | 2.059 | 2.127 | 2.044 | 1.944 | 1.735 | 1.517 | 1.141 | 0.886 | 0.672 | 0.503 | 0.182 | 0.112 | 0.072 | 0.047 |
| X-s | 1.226 | 1.759 | 1.826 | 1.718 | 1.688 | 1.521 | 1.346 | 1.022 | 0.820 | 0.606 | 0.456 | 0.166 | 0.098 | 0.065 | 0.042 |
| Max | 1.547 | 2.156 | 2.250 | 2.172 | 2.031 | 1.828 | 1.578 | 1.156 | 0.906 | 0.688 | 0.516 | 0.188 | 0.116 | 0.073 | 0.048 |
| Min | 1.109 | 1.641 | 1.703 | 1.656 | 1.578 | 1.453 | 1.297 | 1.000 | 0.813 | 0.594 | 0.438 | 0.163 | 0.094 | 0.063 | 0.042 |
| R | 0.438 | 0.515 | 0.547 | 0.516 | 0.453 | 0.375 | 0.281 | 0.156 | 0.093 | 0.094 | 0.078 | 0.025 | 0.022 | 0.010 | 0.006 |

(Unit:Vpp)

TABLE 2

## Claims

1. A kind of Thermal Isolation Frequency Transferable Pyro-electric Infrared Radiation Detector and Its process comprising the following process :

   (1) the base plate is welded to the board of electric circuit;
   (2) the FET circuit elements are installed on the base plate; after welding and washing, an electric conducting adhesive substance is coated on the base plate.
   (3) the supporting columns are cut, washed, metal cemented under high temperature, re-cut and placed into the base plate and adhered to the base plate; After being hardened, the base plate is divided;

(4) the base plate is welded to the bottom foundation, alter washing, inspecting welded spots, an electric conducting adhesive substance is coated on the supporting column;

(5) the pyroelectric element is cut, washed, chromium cemented under high temperature, then adhered to the supporting columns;

(6) the infrared radiation wave filter is cut, then adhered to the outer case which is coated with an adhesive substance;

(7) the outer case is electro-welded to the base foundation;

the special feature is found first in the making process (3) that the supporting columns after being cut and washed, are cemented by certain low thermal conducting material under high temperature; and second, in the making process (6), after die infrared radiation wave filter is adhered to die outer case with an adhesive substance, the inner wall surface excluding the part occupied by the infrared radiation wave filter, is coated with thermal isolation material.

2. Thermal Isolation Frequency Transferable Pyroelectric Infrared Radiation Detector and Its Making Process as mentioned in claim 1, the applied low thermal conducting material nickie.

3. Thermal Isolation Frequency Transferable Pyroelectric Infrared Radiation Detector and Its Making Process as mentioned in claim item 1, the applied thermal isolation material acrylic resin paint.

4. A kind of Thermal Isolation Frequency Transferable Pyroelectric Infrared Radiation Detector comprises following items :

one cylindrical outer case made of matalic material, and on the upper part of the said outer case, a rectangular open window is equipped.;

one infrared radiation wave filter mounted on the open window to filter out unnecessary visible light and grant to pass only the infrared radiation wave with length between 7 ~ 14 um.;

one pyroelectric element whose upper part being cemented with a heat absorbing material such as chromium under high temperature for absorbing infrared radiation wave and stimulating the pyroelectric element to generate pyroelectric function;

two supporting columns formed in rectangular shape to support the pyroelectric element;

one base plate, on its upper part rest two supporting columns, some electric circuit element such as FET (field effect transistor) are installed on its bottom surface;

the said circuit elements are connected to the supporting columns by means of the welded spots located on the upper surface of the base plate, and the circuit is connected to the electrical terminals under the bottom foundation making use of the opposite sides of the welded spots.;and

one circular bottom foundation with a jutting point atone side of it and three terminal feet within it for electric connection;

the special feature is that the inner wall surface of the outer case excluding the part occupied by the open window is coated with a thermal isolation material in order to reduce the heat dissipation by radiation and convection; furthermore, the material used to construct the supporting columns is of low thermal conductivity causing increase of thermal resistance of the supporting columns and heat dissipation by conduction is greatly reduced; by such methods the low frequency response, sensitivity, stability and detecting ability of the pyroelectric infrared radiation detector are significantly improved to identify low speed moving objects.

5. Thermal Isolation Frequency Transferable Pyroelectric Infrared Radiation Detector and its Making Process as mentioned in claim 4, the low thermal conductivity material such as nickle employed to make the supporting columns, but it does not affect the electric conductivity of the supporting columns.

6. Thermal Isolation Frequency Transferable Pyroelectric Infrared Radiation Detector and Its Making Process as mentioned in claim 4, acrylic resin paint used as thermal isolation material.

7. A radiation detector comprising:

i) a base plate (5) having a coating of electrically conductive adhesive;

ii) one or more FET circuit elements joined to the base plate;

iii) one or more support elements (4) connecting the base plate (5) to a pyroelectric element (3);

iv) a base member (6) connected to the base plate (5); and

v) an outer case (1) including a radiation filter (2);

said outer case and base member enclosing said base plate, support elements and pyroelectric element; characterised in that:
said one or more support elements (4) are coated with a low thermally conductive material; and
a portion of the inner surface of the outer case (1) is coated with thermally insulating material.

FIG. 1

FIG. 2

FIG. 3

**FIG. 4**

FIG. 5

FIG. 6

FIG. 7

# FIG. 8

**2**  **1**  **3 6**  **4**  **51**  **5**  Ⓐ

| cutting | | inspection | | | | cutting | | | | inspection | | installing pyroelectric element |
|---|---|---|---|---|---|---|---|---|---|---|---|---|

washing → mark printing → treatment of welded points → hardening → Ⓑ

coating electric conducting substance

washing

installing FET elements

metal coating

connection by electro-welding

installing infrared radiation wave filter

cutting

welding

washing

voltage rating test

coating adbisive substance

coating electric conducting substance

air tight test

hardening

installing supporting column

factory test

coating thermal isolation material

hardening

packing

Ⓑ

dividing base plate

installing base plate

cutting

welding

washing

metal coating

welded points inspection

coating electric conducting substance

Ⓐ

*FIG. 9*

EP 0 775 895 A1

FIG. 10

19

| | | | | | | |
|---|---|---|---|---|---|---|
| | **European Patent Office** | **EUROPEAN SEARCH REPORT** | | | Application Number EP 95 30 8492 | |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 133 615 (PHILIPS ELECTRONIC ASSOCIATED) 25 July 1984<br>* the whole document *<br>--- | 1,4,7 | G01J5/34 |
| A | US-A-4 441 023 (DOCTOR ALAN P ET AL) 3 April 1984<br>* the whole document *<br>--- | 1,4,7 | |
| A | US-A-4 110 616 (PORTER STEPHEN GEORGE ET AL) 29 August 1978<br>* column 5, line 40 - line 44; claims 1,2,6,8 *<br>--- | 1,4,7 | |
| A | DATABASE WPI<br>Section Ch, Week 9543<br>Derwent Publications Ltd., London, GB;<br>Class J04, AN 95-113240<br>XP002002390<br>& SE-A-9 001 365 (GEC-MARCONI LTD) , 16 June 1995<br>* abstract *<br>----- | 1,4,7 | |
| | | | TECHNICAL FIELDS SEARCHED (Int.Cl.6) |
| | | | G01J |

The present search report has been drawn up for all claims

| Place of search | Date of completion of the search | Examiner |
|---|---|---|
| THE HAGUE | 7 May 1996 | Scheu, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)